# EUROPÄISCHE PATENTSCHRIFT

(11) **EP 2 179 948 B1**
(45) Veröffentlichungstag und Bekanntmachung des Hinweises auf die Patenterteilung: **18.07.2012**
(21) Anmeldenummer: 08018541.6
(22) Anmeldetag: 23.10.2008
(51) Int. Cl.: B65G 67/20

(54) **Vorrichtung zum Be-oder Entladen von Transportgut in und aus einem Laderaum**
Device to load or unload transported goods into and out of a storage room
Dispositif destiné au chargement ou au déchargement de produits dans une chambre de stockage

(43) Veröffentlichungstag der Anmeldung: 28.04.2010
(73) Patentinhaber: Stöhr, Hartmut Wolfgang, 55606 Kirn (DE)
(72) Erfinder: Stöhr, Hartmut Wolfgang, 55606 Kirn (DE)
(74) Vertreter: Katscher Habermann Patentanwälte

(56) Entgegenhaltungen:
- EP-A- 1 743 857
- FR-A- 2 584 685
- JP-A- 61 045 834
- US-A- 5 082 415

## Beschreibung

Die Erfindung betrifft eine Vorrichtung zum Be- und Entladen von Transportgut in und aus einem Laderaum mit einer in Förderrichtung verlagerbaren Förderkette, die mehrere schwenkbar miteinander verbundene Kettenglieder aufweist, und mit einer mit der Förderkette in Wirkverbindung stehenden Hubvorrichtung, wobei die Hubvorrichtung dem zu befördernden Transportgut zugewandt auf der Förderkette angeordnet und mit der Förderkette verlagerbar ist und wobei die Hubvorrichtung ein mit einem Fluid befüllbarer Druckschlauch ist.

Aus der Praxis ist es bekannt, dass zu transportierende Güter auf standardisierten Paletten angeordnet und für die Dauer des Transports befestigt werden. Die einzelnen Paletten können mit geeigneten Flurförderfahrzeugen, wie beispielsweise mit Gabelstaplern, in einen für den Transport verwendeten Laderaum hinein und nach einem erfolgten Transport aus diesem Laderaum wieder heraus verfrachtet werden. Üblicherweise für den Transport verwendete Laderäume sind beispielsweise der Laderaum eines Nutzfahrzeugs oder der eines Containers, der wahlweise zu Land, zu Wasser oder in der Luft transportiert werden kann.

Das Befüllen eines Laderaums mit Transportgütern ist auch bei Verwendung von Paletten oder anderen gegebenenfalls standardisierten Transportbehältern mühsam und zeitaufwendig. Die einzelnen Paletten müssen beispielsweise von einem Gabelstapler jeweils einzeln aufgenommen und nacheinander in den Laderaum hinein verfahren werden. Auch ein erfahrener Gabelstaplerfahrer benötigt für das vollständige Beladen eines Containers oder eines Sattelschleppers viel Zeit. Eine unbeabsichtigte Beschädigung des Transportguts kann dabei nicht ausgeschlossen werden. Insbesondere bei häufigen Be- und Entladevorgängen, wie sie beispielsweise an Umschlagplätzen und (Zwischen-)Lagerstätten erforderlich werden, entsteht durch die Verwendung von üblicherweise motorisierten Gabelstaplern eine erhebliche Umweltbelastung durch Lärm, durch Abgase und durch unvermeidliche Lecks austretende Kraftstoff- und Ölmengen.

Um das Beladen eines Laderaums mit Transportgut zu beschleunigen und zu automatisieren, ist es beispielsweise aus DE 38 32 464 A1 bekannt, eine auf einem Ladeboden eines Laderaums fest montierte Vorrichtung zum Be- und Entladen anzuordnen. Die Vorrichtung weist umlaufend angetriebene Endlosketten und üblicherweise pneumatisch heb- und senkbare Hubvorrichtungen auf. Derartige Be- und Entladevorrichtungen müssen jedoch immer in dem Nutzfahrzeug oder in dem Container mitgeführt werden und können ausschließlich zum Be- und Entladen des betreffenden Laderaums verwendet werden.

Aus DE 10 2005 033 289 A1 oder US 5,082,415 A ist jeweils eine Vorrichtung zum Be- und Entladen der eingangs genannten Gattung bekannt, die sich außerhalb des zu beladenden Laderaums befindet und deshalb grundsätzlich dafür geeignet ist, wechselnde Laderäume zu Be- oder Entladen. Zu diesem Zweck weist diese Vorrichtung eine endliche Förderkette auf, die aus einem Magazin heraus in eine in dem Laderaum angeordnete Ablageführung hinein- und herausgeführt werden kann. In den oben offenen, C-Profilförmigen Ablageführungen befindet sich unterhalb der darüber geführten Förderkette eine Hubvorrichtung, mittels derer die Förderkette und das gegebenenfalls darauf angeordnete Transportgut angehoben und längs der Ablageführung verlagert werden kann.

Es hat sich gezeigt, dass mit einer derartigen Vorrichtung ein vollständig automatisiertes Be- und Entladen beispielsweise von Nutzfahrzeugen oder Containern innerhalb von kurzer Zeit ermöglicht wird. Allerdings müssen die Laderäume jeweils geeignete Ablageführungen aufweisen. Diese Ablageführungen können fest in dem Laderaum montiert sein und müssen dann kontinuierlich mit dem Laderaum mitgeführt werden. Die Ablageführungen können auch lösbar zum Zwecke des Be- und Entladens mit dem Laderaum verbunden und anschließend wieder entnommen werden. In diesem Fall müssen die Ablageführungen jedoch an den Be- und Entladeort in ausreichender Menge zur Verfügung stehen und für jeden Be- und Entladevorgang montiert werden.

Aus JP 61 045834 A ist eine Beladevorrichtung bekannt, bei der eine breite Verladekette es erleichtert, das Transportgut auf mehreren Walzen in den Laderaum hineinzuschieben. Die Verladekette kann anschließend aus dem Laderaum herausgezogen werden, sofern das Transportgut gleichzeitig beispielsweise mit Hilfe eines Gabelstaplers in dem Laderaum fixiert wird.

Eine Fördereinrichtung der eingangs genannten Gattung wird beispielsweise in FR 2 584 685 A beschrieben. Die Befüllung des als Hubvorrichtung verwendeten Druckschlauchs erfolgt von der dem Laderaum abgewandten Seite, ohne dass hierzu weitere Informationen mitgeteilt werden.

Aufgabe der Erfindung ist es demzufolge, eine Vorrichtung zum Be- und Entladen von Transportgut so auszugestalten, dass mit konstruktiv einfachen Mitteln eine schnelle und automatisierbare Be- und Entladung eines Laderaums ermöglicht wird, ohne dass die Vorrichtung oder Teile davon in dem Laderaum fest montiert und kontinuierlich mitgeführt werden müssen. An dem Laderaum sollen möglichst wenig konstruktive Änderungen vorgenommen werden müssen, so dass auch eine konventionelle Be- und Entladung mittels manuell gesteuerter Flurfördereinrichtungen, wie beispielsweise Gabelstaplern, möglich ist.

Diese Aufgabe wird erfindungsgemäß dadurch gelöst, dass der Druckschlauch an seinem dem Laderaum zugewandten Ende eine Befüllungsöffnung zum Befüllen mit dem Fluid aufweist und ein Füllschlauch an einem Ende mit der Befüllungsöffnung des Druckschlauches und an einem anderen Ende mit einem Fluidreservoir verbunden ist und dass die Kettenglieder an den Füllschlauch angepasste Ausnehmungen und/oder Ausformungen zur Aufnahme und zur seitlichen Führung des Füllschlauchs aufweisen.

Der Füllschlauch kann dabei entweder seitlich neben dem Druckschlauch oder aber unterhalb des Druckschlauches auf der Förderkette angeordnet sein. Es hat sich gezeigt, dass eine Befüllung des Druckschlauches mit dem Fluid von seinem dem Laderaum zugewandten Ende aus eine schnellere Befüllung und damit ein rascheres Anheben bzw. anschließendes wieder Absenken des üblicherweise in diesem Bereich angeordneten Transportguts ermöglicht.

Eine gesonderte Ablageführung, die im wesentlichen der Aufnahme und Führung der Hubvorrichtung dient, ist nicht mehr erforderlich. Die Förderkette kann zusammen mit der darauf angeordneten Hubvorrichtung aus einem Magazin heraus abgeholt und in einen Laderaum hinein bewegt bzw. wieder aus dem Laderaum heraus bewegt werden.

Bei einer geeigneten Ausgestaltung der Förderkette kann erreicht werden, dass die Förderkette im Wesentlichen sich nur in der beabsichtigten und durch die Ausrichtung der Förderkette vorgegebenen Richtung bewegen kann. Ein unerwünschtes seitliches Abweichen bzw. Ausbrechen der Förderkette muss nicht befürchtet werden. Die Förderkette kann dabei teilweise oder vollständig aus Kunststoff hergestellt sein.

Ein wesentlicher Vorteil der erfindungsgemäßen Ausgestaltung kann darin gesehen werden, dass die Vorrichtung zum Be- und Entladen vollständig außerhalb des zu beladenden Laderaums angeordnet und betätigt werden kann und in dem Laderaum keine konstruktiven Veränderungen dauerhafter oder temporärer Art erforderlich sind, um ein Be- oder Entladen des Laderaum mit der außerhalb angeordneten Vorrichtung zu ermöglichen. Dabei ist sowohl eine Heckbeladung als auch eine seitliche oder frontale Beladung der Laderäume in einfacher Weise und vollständig automatisiert möglich.

Als Fluid kann beispielsweise Druckluft oder eine geeignete Flüssigkeit wie beispielsweise Wasser verwendet werden. Es hat sich gezeigt, dass insbesondere Wasser ein für diese Zwecke vorteilhaft verwendbares Fluid darstellt, da Wasser mittels geeigneter Pumpen schnell in den Druckschlauch hinein und aus dem Druckschlauch heraus gefördert werden kann, ein gegebenenfalls auftretendes Leck schnell aufgefunden werden kann und unbeabsichtigt austretendes Wasser weder Beschädigungen noch nennenswerte Verunreinigungen innerhalb der Vorrichtung oder in dem Laderaum und insbesondere an dem Transportgut herbeiführen kann.

Gemäß einer vorteilhaften Ausgestaltung des Erfindungsgedankens ist vorgesehen, dass die Kettenglieder Ausnehmungen und/oder Ausformungen zur Aufnahme und zur seitlichen Führung des Druckschlauchs aufweisen. Durch geeignete Ausnehmungen wie beispielsweise eine sich in Förderrichtung über sämtliche Kettenglieder erstreckende mittige Vertiefung kann ein die Mitnahme des Druckschlauchs auf der sich verlagernden Förderkette unterstützt und eine seitliche Führung gewährleistet werden bzw. verhindert werden, dass der Druckschlauch sich relativ zu der darunter befindlichen Förderkette verlagert und beispielsweise von der Förderkette herabfällt.

Zusätzlich oder stattdessen kann vorgesehen sein, dass die Hubvorrichtung bzw. der Druckschlauch mindestens an einem dem Laderaum zugewandten Ende der Förderkette an der Förderkette festlegbar ist. Die Förderkette ist an einem dem Laderaum abgewandten Ende an der Vorrichtung festgelegt und zweckmäßigerweise in einem Magazin gelagert bzw. aufgerollt. Zum Befördern des Transportgutes kann die Förderkette mit dem freien, dem Laderaum zugewandten Ende voraus aus dem Magazin heraus und in den Laderaum hinein bewegt werden.

Um den Druckschlauch, der im Bereich der Vorrichtung bzw. des Magazins zuverlässig auf der Förderkette geführt und gelagert werden kann, auch im Bereich des freien Endes der Förderkette an dieser zu fixieren, können beispielsweise elastische Haltebänder verwendet werden, die den Druckschlauch umgreifen und beidseitig an der Förderkette gegebenenfalls lösbar befestigt sind.

Besonders vorteilhaft ist dabei vorgesehen, dass der Druckschlauch im Bereich der Vorrichtung von der Förderkette lösbar und auf ein walzenförmiges Druckschlauchmagazin aufwickelbar ist. Durch eine geeignete Anordnung von Friktionswalzen kann dabei sicher gestellt werden, dass der von der Förderkette gelöste Druckschlauch unmittelbar von dem Aufwickeln auf die Lagerwalze entleert wird. Wird der Druckschlauch von seinem vorderen, dem Laderaum zugewandten Ende her mit Fluid befüllt, so muss lediglich derjenige Teil des Druckschlauchs befüllt werden, der sich zwischen seinem vorderen, gegebenenfalls zusammen mit der Förderkette ausgefahrenen Ende und den Friktionswalzen befindet, die den ausgefahrenen Teil des Druckschlauchs gegenüber dem noch auf der Walze aufgewickelten bzw. nicht abgewickelten Teil des Druckschlauchs abtrennt. Eine vollständige Befüllung des Druckschlauchs ist demzufolge nur dann erforderlich, wenn die Förderkette vollständig in den Laderaum ausgefahren ist. In den meisten Fällen reicht jedoch eine teilweise Befüllung bzw. Entleerung des Druckschlauchs aus, um das mit der Förderkette zu befördernde Transportgut anzuheben bzw. nach dessen Beförderung wieder abzusenken.

Da der Druckschlauch nicht zusammen mit der Förderkette in einem Magazin aufgerollt bzw. untergebracht werden muss, lässt sich eine besonders raumsparende getrennte Lagerung der Förderkette und des Druckschlauches bewerkstelligen.

Eine besonders raumsparende und zuverlässige Anordnung bzw. Festlegung des Füllschlauchs an der Förderkette lässt sich dadurch erreichen, dass die Kettenglieder mittig angeordnete Ausnehmungen zur Aufnahme des Füllschlauchs unter dem Druckschlauch aufweisen. Der Füllschlauch ist dabei sowohl von unten als auch seitlich von den einzelnen Kettengliedern umgeben und geschützt und an seiner Oberseite von dem darüber angeordneten Druckschlauchs gegenüber dem zu befördernden Transportgut abgeschirmt.

Es kann zweckmäßig und im Hinblick auf eine besonders raumsparende Aufbewahrung des Füllschlauchs und der Förderkette innerhalb der Vorrichtung vorteilhaft sein, dass der Füllschlauch im Bereich der Vorrichtung von der Förderkette lösbar und auf ein walzenförmiges Füllschlauchmagazin aufwickelbar ist. Eine konstruktiv einfache und besonders raumsparende Anordnung lässt sich dadurch erreichen, dass sowohl der Druckschlauch als auch der Füllschlauch an einem dem Laderaum abgewandten Ende der Vorrichtung auf Walzen aufgewickelt gelagert und bei Bedarf abgewickelt und zusammen mit der Förderkette in Förderrichtung abgewickelt und befahren werden kann.

Für die meisten Anwendungsfälle und insbesondere zum Befördern von auf Paletten angeordneten Transportgütern ist es vorteilhaft, wenn die Vorrichtung zwei parallel angeordnete und ausgerichtete Förderketten aufweist, die zur Beförderung des auf beiden Förderketten gelagerten Transportguts gleichsinnig und parallel in den Laderaum hinein und aus dem Laderaum heraus bewegt bzw. verlagert werden. Es können natürlich auch mehrere Förderketten parallel angeordnet und gleichsinnig bewegbar sein.

Um mit einer einzigen Vorrichtung möglichst effizient und kostengünstig mehrere Laderäume zeitlich aufeinanderfolgend Be- und Entladen zu können, ist vorgesehen, dass die Vorrichtung als Flurförderfahrzeug ausgebildet ist. Zu diesem Zweck weist die Vorrichtung seitlich angeordnete Räder auf, mittels derer die Vorrichtung insbesondere quer zu der Förderrichtung der Förderketten bewegt und verlagert werden kann. Um eine einfache Führung der Vorrichtung zu ermöglichen, ist denkbar, dass die Vorrichtungen auf senkrecht zur Förderrichtung der Förderketten angeordneten Schienen verlagerbar ist, die beispielsweise parallel zu einer Ladekante verlaufen, an denen mehrere Nutzfahrzeuge, wie beispielsweise Sattelschlepper, nebeneinander zum Be- und Entladen an eine Lagerhalle heranfahren können.

Nachfolgend wird ein Ausführungsbeispiel der Erfindung näher erläutert, das in der Zeichnung dargestellt ist. Es zeigt:
Fig. 1 eine schematische Draufsicht auf eine längs einer Verladekante verfahrbaren erfindungsgemäßen Vorrichtung zum Be- und Entladen von an der Verladekante befindlichen Nutzfahrzeugen bzw. Containern,
Fig. 2 eine geschnittene Seitenansicht der Vorrichtung,
Fig. 3 eine teilweise geschnittene schematische Darstellung einer aus der Vorrichtung in Förderrichtung verlagerbaren Förderkette im Bereich eines dem Laderaum zugewandten Endes zusammen mit einem auf der Förderkette angeordneten Druckschlauch,
Fig. 4 eine Schnittansicht durch die in Fig. 3 dargestellte Förderkette längs der Linie IV-IV in Fig. 3,
Fig. 5 eine Seitenansicht eines Kettenglieds der Förderkette,
Fig. 6 eine geschnittene Vorderansicht des in Fig. 5 dargestellten Kettenglieds,
Fig. 7 eine geschnittene Ansicht des in den Fig. 5 und 6 dargestellten Kettenglieds von unten und
Fig. 8 eine schematische Darstellung einer in ihrer Neigung verstellbaren Andockbrücke, die zwischen der Vorrichtung und einem zu beladenden Laderaum angeordnet sein kann.

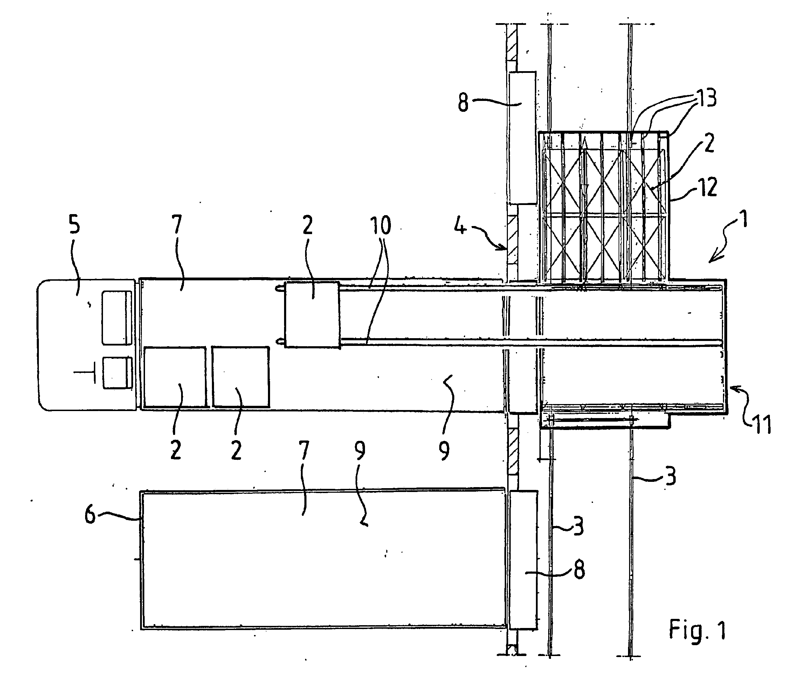

In Fig. 1 ist lediglich beispielhaft und schematisch eine erfindungsgemäße Vorrichtung 1 zum Be- und Entladen von auf Paletten angeordneten Transportgütern 2 dargestellt. Die Vorrichtung 1 kann auf Schienen 3 längs einer Verladekante 4 bewegt und in einer für das Be- und Entladen vorgesehenen Position fixiert werden. Lediglich beispielhaft sind an der Verladekante 4 ein Nutzfahrzeug 5 und ein Container 6 dargestellt, die jeweils einen zur Verladekante 4 hin geöffneten Laderaum 7 aufweisen. Zwischen dem Laderaum 7 und der Vorrichtung 1 befindet sich jeweils eine Andockbrücke 8, mittels derer ein oftmals unvermeidbarer Höhenunterschied der Vorrichtung 1 und einem Laderaumboden 9 des Laderaums 7 ausgeglichen werden kann.

Die für eine Beladung oder Entladung des Laderaums 7 vorgesehenen Transportgüter 2 werden nacheinander auf zwei parallel zueinander angeordneten und ausgerichteten Förderketten 10 platziert. Durch eine Verlagerung der beiden Förderketten 10 in den Laderaum 7 hinein oder aus dem Laderaum 7 heraus können die auf den Förderketten 10 befindlichen Transportgüter 2 Be- oder Entladen werden. Die Vorrichtung 1 ermöglicht eine vollständig automatisierbare Be- und Entladung eines beliebigen Laderaums 7. Durch die Ausgestaltung der Vorrichtung 1 als ein auf Schienen verfahrbares Fluorförderfahrzeug kann die Vorrichtung 1 zum Be- und Entladen von mehreren nebeneinander an der Verladekante 4 angeordneten Laderäumen 7 verwendet werden.

Die Vorrichtung 1 kann mehrere Förderketten 10 aufweisen, die beispielsweise jeweils paarweise unabhängig voneinander betätigt und zum gleichzeitigen Be- und Entladen von mehreren nebeneinander angeordneten Transportgütern verwendet werden.

Die Vorrichtung 1 ist vorzugsweise flach ausgestaltet, so dass eine einfache Bestückung oder Entnahme von Transportgütern 2 von der Vorrichtung 1 auf einer dem Laderaum 7 abgewandten Seite 11 möglich ist. Um eine seitliche Beladung der Vorrichtung 1 zu erleichtern, kann seitlich eine Bestückungsplattform 12 an der Vorrichtung 1 angeordnet und mit dieser befestigt sein. Die Bestückungsplattform 12 weist beispielsweise endlose umlaufende Förderbänder 13 auf, mittels derer auf der Bestückungsplattform 12 befindliche Transportgüter 2 auf die Vorrichtung 1 bzw. auf das zugeordnete Paar von Förderketten 10 verlagert werden kann.

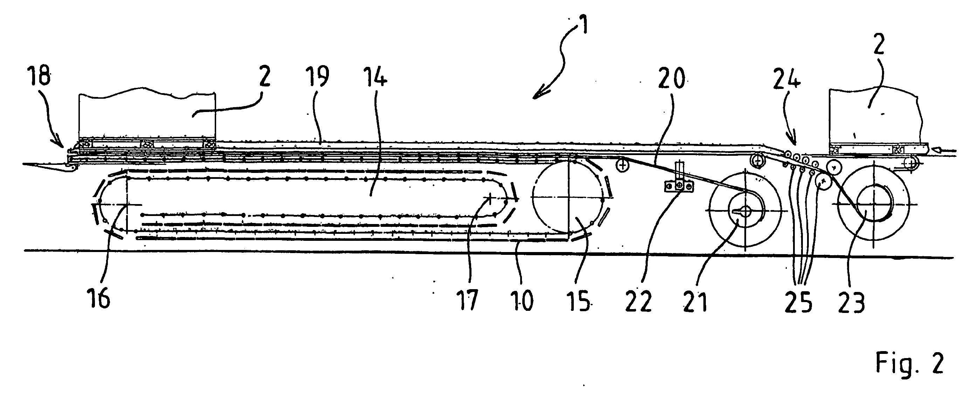

Die in Fig. 2 dargestellte Seitenansicht zeigt in schematischer Darstellung eine Vorrichtung 1 mit einer beispielhaften Anordnung eines flachen Magazins 14 zur Aufnahme einer zugeordneten Förderkette 10. Die Förderkette 10 wird dabei mittels geeigneter, nicht dargestellter Führungselemente um eine in der Vorrichtung 1 angeordnete Umlenkeinrichtung 15 und anschließend weitere Umlenkeinrichtungen 16, 17 geführt und kann weitgehend in das Magazin 14 eingefahren und dort gelagert werden. Um ein Transportgut 2 befördern zu können, muss die Förderkette 10 aus dem Magazin heraus und mit einem dem Laderaum 7 zugewandten freien Ende 18 voraus in den Laderaum 7 hineingefahren werden.

Zum Anheben bzw. zum Absenken des zu befördernden Transportguts 2 auf der Förderkette 10 ist auf der Förderkette 10 bzw. zwischen der Förderkette 10 und dem Transportgut 2 ein Druckschlauch 19 angeordnet und gelagert. Der Druckschlauch 19 wird an dem freien Ende 18 der Förderkette 10 mit einem geeigneten Fluid, beispielsweise Wasser, befüllt. Zu diesem Zweck ist ebenfalls auf der Förderkette 10 ein Füllschlauch 20 angeordnet, dessen eines Ende im Bereich des freien Endes 18 der Förderkette 10 mit dem Druckschlauch 19 verbunden ist und dessen anderes Ende auf ein walzenförmiges Füllschlauch-Magazin 21 aufwickelbar ist. Im Bereich der Umlenkeinrichtung 15 für die Förderkette 10 wird der Füllschlauch 20 zu diesem Zweck von der Förderkette 10 gelöst und mittels geeigneter Seitenführungseinrichtungen 22 kontrolliert auf das Füllschlauch-Magazin 21 aufgewickelt.

In gleicher Weise wird auch der Druckschlauch 19 im Bereich der Umlenkeinrichtung 15 von der Förderkette 10 gelöst und auf ein zugeordnetes Druckschlauch-Magazin 23 aufgewickelt. Unmittelbar vor dem Druckschlauch-Magazin 23 ist eine Quetschvorrichtung 24 mit mehreren Friktionswalzenpaaren 25 angeordnet, die während des Aufwickelns des Druckschlauchs 19 auf das Druckschlauch-Magazin 23 das in dem Druckschlauch 19 befindliche Fluid auspresst, so dass ein vollständig entleerter Druckschlauch 19 auf das Druckschlauch-Magazin 23 aufgewickelt werden kann. Zu diesem Zweck weisen die mehreren sukzessiv angeordneten Friktionswalzenpaare 25 einen in Richtung des Druckschlauch-Magazins zunehmend kleiner werdenden Abstand auf.

Wird der Druckschlauch 19 über den Füllschlauch 20 an dessen freien Ende mit einem Fluid befüllt, so dass er sich aufbläht und das darauf angeordnete Transportgut 2 anhebt, so wird durch die Quetschvorrichtung 24 gewährleistet, dass lediglich der bereits von dem Druckschlauch-Magazin 23 abgewickelte Teil des Druckschlauches 19 mit dem Fluid befüllt wird und das Fluid nicht in dem Teil des Druckschlauches 19 eindringen kann, der sich noch in dem Druckschlauch-Magazin 23 befindet.

Durch die flache Ausgestaltung des Magazins 14 für die Förderketten 10 und das jeweils dahinter angeordnete separate Füllschlauch-Magazin 21 bzw. Druckschlauch-Magazin 23 kann eine äußerst flache Bauform der Vorrichtung 1 mit einer Gesamthöhe von etwa 30-40 cm erreicht werden. Die Vorrichtung 1 kann deshalb in einfacher Weise von allen Seiten mit Transportgütern 2 bestückt werden, die in den Laderaum 7 gefördert werden sollen. In gleicher Weise kann auch aus dem Laderaum 7 heraus gefördertes Transportgut 2 von allen Seiten von der Vorrichtung 1 entnommen werden.

Es ist natürlich ebenfalls denkbar, dass mit der Vorrichtung 1 Transportgüter 2 aus einem Laderaum in einen weiteren Laderaum 7 hinein umgepackt werden und dabei während des Umpackvorgangs auf der Vorrichtung 1 verbleiben.

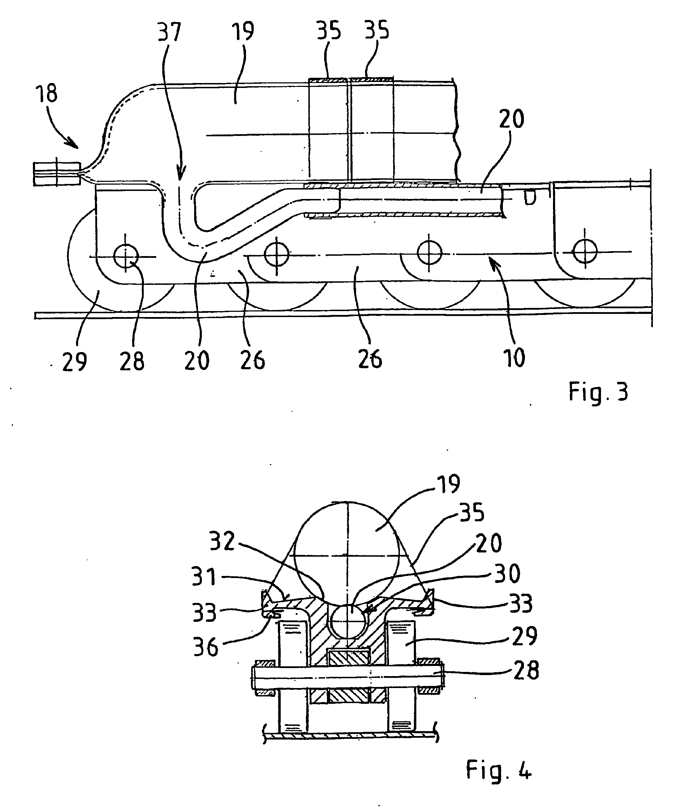

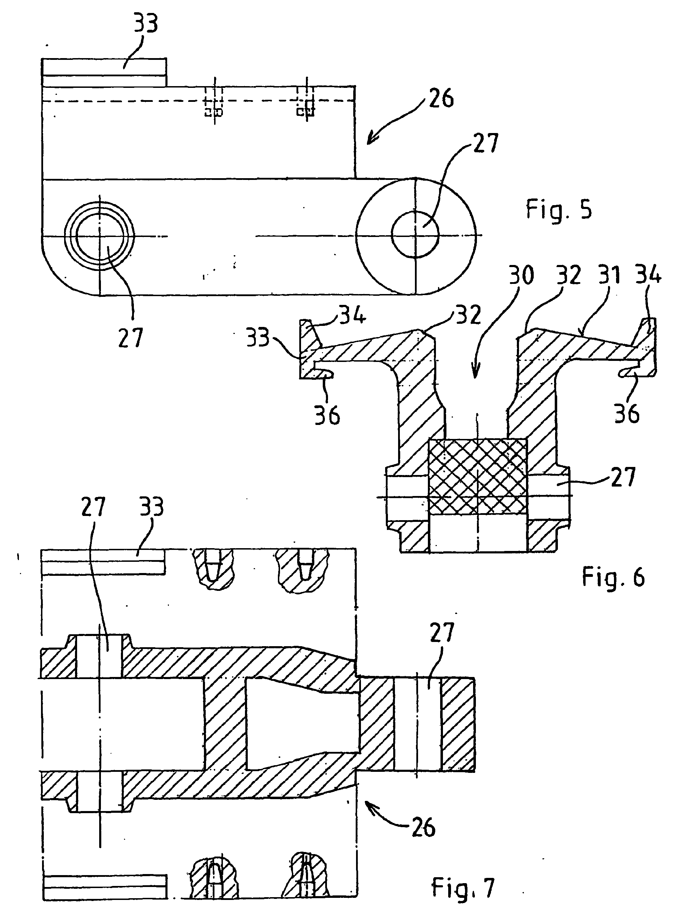

In den Fig. 3-7 sind jeweils Schnittansichten bzw. eine Seitenansicht der aus mehreren Kettengliedern 26 zusammengesetzten Förderkette 10 bzw. eines einzelnen Kettenglieds 26 dargestellt. Das in den Fig. 5-7 zur Veranschaulichung einzeln dargestellte Kettenglied 26 weist zwei beabstandet zueinander angeordnete Bohrungen 27 zur Aufnahme einer in den Fig. 3 und 4 dargestellten Achse 28 auf, die zu beiden Seiten des Kettenglieds 26 angeordnete Räder 29 miteinander verbinden. Die Bohrungen 27 bilden einen Presssitz für die Achse 28, so dass die einzelnen Kettenglieder 26 und damit die daraus gebildete Förderkette 10 ausreichend gute Geradeaus-Laufeigenschaften aufweist und seitliche Führungselemente zur Führung der Förderketten 10 nicht erforderlich sind.

In einem mittigen Bereich weist jedes Kettenglied 26 eine sich in Förderrichtung bzw. längs der Förderkette 10 erstreckende Ausnehmung 30 zur Aufnahme des Füllschlauchs 20 auf. Die Abmessungen der Ausnehmung 30 sind an die Abmessungen des Füllschlauchs 20 angepasst und ermöglichen eine Aufnahme des Füllschlauchs 20 im Inneren des Kettenglieds 26. An einer Oberseite 31 des Kettenglieds 26 sind beiderseitig der Ausnehmung 30 nach unten zur Ausnehmung 30 schräg verlaufende Aufnahmeflächen 32 angeordnet. Im Bereich der Oberseite 31 weisen die Kettenglieder 26 zu beiden Seiten vorspringende Flügelelemente 33 mit einem nach oben vorspringenden Endbereich 34 auf.

Die Flügelelemente 33 dienen dazu, den nicht befüllten und deshalb flachen Druckschlauch 19 auf der Oberseite 31 der Kettenglieder 26 und damit auf der Oberseite der Förderkette 10 aufnehmen und lagern zu können. Wird der Druckschlauch 19 mit Fluid befüllt, so bläht er sich auf und eine näherungsweise zylinderförmige Gestalt an. Die Auflageflächen 32 sind hinsichtlich ihrer Anordnung und Ausrichtung an die Formgebung des mit dem Fluid befüllten Druckschlauchs 19 angepasst und gewährleisten eine zuverlässige Aufnahme und seitliche Führung des mit Fluid befüllten Druckschlauchs 19.

Zusätzlich können im Abstand voneinander angeordnete elastische Bänder 35 den Druckschlauch 19 auf der Oberseite 31 der Kettenglieder 26 fixieren. Die den Druckschlauch 19 umgreifenden elastischen Bänder 35 sind zu diesem Zweck beidseitig lösbar mit daran angepassten Ausformungen 36 der Flügelelemente 33 verbindbar.

Die einzelnen Kettenglieder 26 können in vorteilhafter Weise teilweise oder vollständig aus einem geeigneten Kunststoffmaterial hergestellt sein. Durch die Verwendung üblicher Kunststoff-Spritzgussverfahren können auch komplexe Formgebungen für die einzelnen Kettenglieder 26 schnell und kostengünstig realisiert werden. Aus Kunststoff hergestellte Kettenglieder 26, bzw. eine überwiegend oder vollständig aus Kunststoff bestehende förderkette 10 erfordert keine zusätzlichen Schmiermittel wie Fette oder Öle, ist nicht rostend und weitgehend unempfindlich gegenüber den Umgebungsbedingungen und auch für eine Verwendung in Bereichen mit besonderen Reinheitsanforderungen beispielsweise bei lebensmittelverarbeitenden Betrieben geeignet. Sofern erforderlich können einzelne mechanisch besonders belastete Bereiche wie beispielsweise die Bohrungen 27 für die Achsen 28 zusätzliche Verstärkungselemente oder beispielsweise eine metallische Hülse aufweisen.

An dem vorderen, freien Ende 18 der Förderkette 10 mündet der Füllschlauch 20 in eine Befüllöffnung 37 des Druckschlauchs 19.

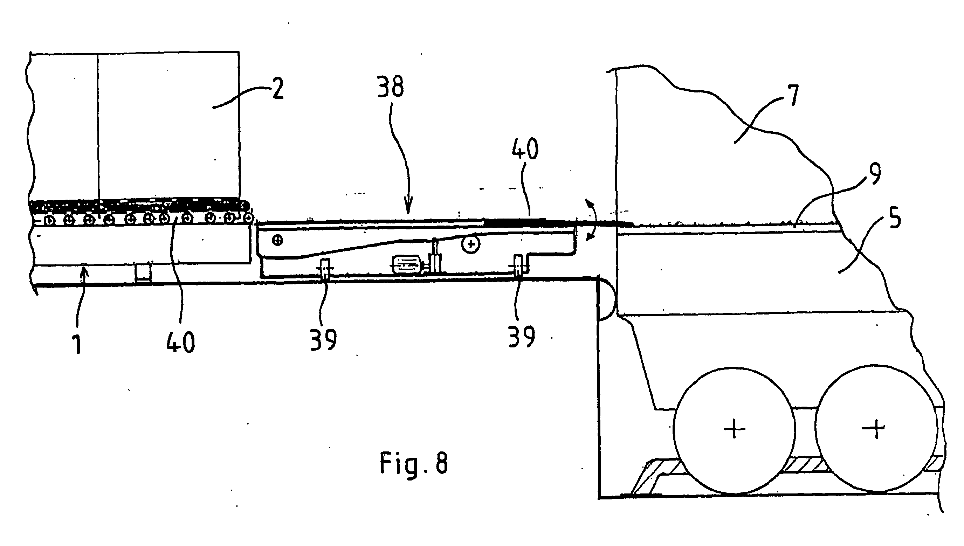

In Fig. 8 ist lediglich exemplarisch eine anders ausgestaltete Andockbrücke 38 dargestellt, die ebenfalls auf Rollen 39 bzw. zugeordneten Schienen parallel zu der Verladekante 4 verfahren und zwischen der Vorrichtung 1 und dem Laderaum 7 eines Nutzfahrzeugs 5 oder eines Containers 6 angeordnet und fixiert werden kann. Die Andockbrücke 38 weist eine schwenkbar gelagerte Plattform 40 auf, deren Neigung in Richtung des Laderaums 7 angepasst werden kann, um die aus der Vorrichtung 1 in einer vorgegebenen Höhe ausgefahrene Förderkette 10 jeweils zuverlässig auf den Laderaumboden 9 des Laderaums 7 führen zu können.

Natürlich kann die Vorrichtung 1 entweder konstruktiv unverändert oder mit geeigneten konstruktiven Anpassungen auch dazu verwendet werden, abweichend von den exemplarisch in den Figuren beschriebenen Anwendungsbeispielen an Stelle einer Heckbeladung der Laderäume 7 eine seitliche Be- und Entladung der Laderäume 7 automatisiert durchzuführen.

## Patentansprüche

1. Vorrichtung (1) zum Be- und Entladen von Transportgut (2) in und aus einem Laderaum (7) mit einer in Förderrichtung verlagerbaren Förderkette (10), die mehrere schwenkbar miteinander verbundene Kettenglieder (26) aufweist, und mit einer mit der Förderkette (10) in Wirkverbindung stehenden Hubvorrichtung, wobei die Hubvorrichtung dem zu befördernden Transportgut (2) zugewandt auf der Förderkette (10) angeordnet und mit der Förderkette (10) verlagerbar ist und wobei die Hubvorrichtung ein mit einem Fluid befüllbarer Druckschlauch (19) ist, **dadurch gekennzeichnet, dass** der Druckschlauch (19) an seinem dem Laderaum (7) zugwandten Ende eine Befüllungsöffnung (37) zum Befüllen mit dem Fluid aufweist und dass ein Füllschlauch (20) mit einem Ende mit der Befüllungsöffnung (37) des Druckschlauchs (19) und an einem anderen Ende mit einem Fluidreservoir verbunden ist und dass die Kettenglieder (26) an den Füllschlauch (20) angepasste Ausnehmungen (30) und/oder Ausformungen zur Aufnahme und zur seitlichen Führung des Füllschlauches (20) aufweisen.

2. Vorrichtung nach Anspruch 1, **dadurch gekennzeichnet, dass** die Kettenglieder (26) Ausnehmungen und/oder Ausformungen zur Aufnahme und zur seitlichen Führung des Druckschlauchs (19) aufweisen.

3. Vorrichtung nach einem der vorangehenden Ansprüche, **dadurch gekennzeichnet, dass** die Hubvorrichtung mindestens in einem dem Laderaum (7) zugewandten Ende (18) der Förderkette (10) an der Förderkette (10) festlegbar ist.

4. Vorrichtung nach einem der vorangehenden Ansprüche, **dadurch gekennzeichnet, dass** der Druckschlauch (19) im Bereich der Vorrichtung (1) auf ein walzenförmiges Druckschlauch-Magazin (23) aufwickelbar ist.

5. Vorrichtung nach einem der vorangehenden Ansprüche, **dadurch gekennzeichnet, dass** die Kettenglieder (26) mittig angeordnete Ausnehmungen (30) zur Aufnahme des Füllschlauchs (20) unter dem Druckschlauch (19) aufweisen.

6. Vorrichtung nach einem der vorangehenden Ansprüche, **dadurch gekennzeichnet, dass** der Füllschlauch (20) im Bereich der Vorrichtung (1) von der Förderkette (10) lösbar und auf ein walzenförmiges Füllschlauch-Magazin (21) aufwickelbar ist.

7. Vorrichtung nach einem der vorangehenden Ansprüche, **dadurch gekennzeichnet, dass** die Vorrichtung (1) zwei parallel angeordnete und ausgerichtete Förderketten (10) aufweist, die zur Beförderung des auf beiden Förderketten (10) gelagerten Transportguts (2) gleichsinnig und parallel in den Laderaum (7) hinein und aus dem Laderaum (7) heraus verlagerbar sind.

8. Vorrichtung nach einem der vorangehenden Ansprüche, **dadurch gekennzeichnet, dass** die Vorrichtung (1) als Flurförderfahrzeug ausgebildet ist.

## Claims

1. Apparatus (1) for loading and unloading transported material (2) into and out of a loading space (7), having a conveying chain (10) which is displaceable in a conveying direction and has a plurality of chain links (26) connected together in a pivotable manner, and having a lifting apparatus which is operatively connected to the conveying chain (10), wherein the lifting apparatus is arranged on the conveying chain (10) in a manner facing the transported material (2) to be conveyed and is displaceable together with the conveying chain (10), and wherein the lifting apparatus is a pressure tube (19) which can be filled with a fluid, **characterized in that** the pressure tube (19) has, at its end facing the loading space (7), a filling opening (37) for filling with the fluid, and **in that** one end of a filling tube (20) is connected to the filling opening (37) of the pressure tube (19) and the other end is connected to a fluid reservoir, and **in that** the chain links (26) have cutouts (30) and/or recesses, adapted to the filling tube (20), for receiving and laterally guiding the filling tube (20).

2. Apparatus according to Claim 1, **characterized in that** the chain links (26) have cutouts and/or recesses for receiving and laterally guiding the pressure tube (19).

3. Apparatus according to either of the preceding claims, **characterized in that** the lifting apparatus is fixable to the conveying chain (10) at least at an end (18), facing the storage space (7), of the conveying chain (10).

4. Apparatus according to one of the preceding claims, **characterized in that** the pressure tube (19) can be wound up on a roller-like pressure-tube magazine (23) in the region of the apparatus (1).

5. Apparatus according to one of the preceding claims, **characterized in that** the chain links (26) have centrally arranged cutouts (30) for receiving the filling tube (20) under the pressure tube (19).

6. Apparatus according to one of the preceding claims, **characterized in that** the filling tube (20) is detachable from the conveying chain (10) and can be wound up on a roller-like filling-tube magazine (21) in the region of the apparatus (1).

7. Apparatus according to one of the preceding claims, **characterized in that** the apparatus (1) has two conveying chains (10) that are arranged and oriented parallel to one another and are displaceable into the storage space (7) and out of the storage space (7) in the same direction and parallel to one another in order to convey the transported material (2) stored on the two conveying chains (10).

8. Apparatus according to one of the preceding claims, **characterized in that** the apparatus (1) is in the form of an industrial truck.

## Revendications

1. Dispositif (1) destiné au chargement et au déchargement de produits à transporter (2) dans et hors d'un espace de chargement (7), comprenant une chaîne transporteuse (10) pouvant être déplacée dans une direction de transport, laquelle présente plusieurs maillons (26) connectés les uns aux autres de manière pivotante, et comprenant un dispositif de levage en liaison fonctionnelle avec la chaîne transporteuse (10), le dispositif de levage étant disposé sur la chaîne transporteuse (10) et faisant face au produit (2) à transporter, et pouvant être déplacé avec la chaîne transporteuse (10), et le dispositif de levage étant un tuyau sous pression (19) pouvant être rempli d'un fluide, **caractérisé en ce que** le tuyau sous pression (19) présente, à son extrémité tournée vers l'espace de chargement (7), une ouverture de remplissage (37) pour le remplissage avec du fluide, et **en ce qu'**un tuyau de remplissage (20) est relié par une extrémité à l'ouverture de remplissage (37) du tuyau sous pression (19) et par une autre extrémité à un réservoir de fluide et **en ce que** les maillons (26) présentent des évidements (30) adaptés au tuyau de remplissage (20) et/ou des formations pour recevoir et guider latéralement le tuyau de remplissage (20).

2. Dispositif selon la revendication 1, **caractérisé en ce que** les maillons (26) présentent des évidements et/ou des formations pour recevoir et guider latéralement le tuyau sous pression (19).

3. Dispositif selon l'une quelconque des revendications précédentes, **caractérisé en ce que** le dispositif de levage peut être fixé à la chaîne transporteuse (10) au moins dans une extrémité (18) de la chaîne transporteuse (10) faisant face à l'espace de chargement (7).

4. Dispositif selon l'une quelconque des revendications précédentes, **caractérisé en ce que** le tuyau sous pression (19) peut être enroulé dans la région du dispositif (1) sur un magasin de tuyau sous pression (23) en forme de rouleau.

5. Dispositif selon l'une quelconque des revendications précédentes, **caractérisé en ce que** les maillons (26) présentent des évidements disposés centralement (30) pour recevoir le tuyau de remplissage (20) sous le tuyau sous pression (19).

6. Dispositif selon l'une quelconque des revendications précédentes, **caractérisé en ce que** le tuyau de remplissage (20) dans la région du dispositif (1) peut être détaché de la chaîne de transport (10) et être enroulé sur un magasin de tuyau de remplissage (21) en forme de rouleau.

7. Dispositif selon l'une quelconque des revendications précédentes, **caractérisé en ce que** le dispositif (1) présente deux chaînes transporteuses (10) disposées et orientées parallèlement, qui peuvent être déplacées en vue du transport du produit à transporter (2) supporté sur les deux chaînes transporteuses (10) dans le même sens et parallèlement dans l'espace de chargement (7), et hors de l'espace de chargement (7).

8. Dispositif selon l'une quelconque des revendications précédentes, **caractérisé en ce que** le dispositif (1) est réalisé sous forme de chariot de manutention.
